## Europäisches Patentamt
## European Patent Office
## Office européen des brevets

(11) Numéro de publication: **0 063 506**
**B1**

(12) **FASCICULE DE BREVET EUROPEEN**

(45) Date de publication du fascicule du brevet:
**08.08.84**

(21) Numéro de dépôt: **82400509.4**

(22) Date de dépôt: **19.03.82**

(51) Int. Cl.³: **G 02 B 5/16, G 02 B 7/26**

(54) **Dispositif de protection de fibres optiques dégagées à l'extrémité d'un élément de câble, élément de câble muni de ce dispositif, et utilisation d'un tel élément de câble.**

(30) Priorité: **03.04.81 FR 8106771**
**26.05.81 FR 8110453**

(43) Date de publication de la demande:
**27.10.82 Bulletin 82/43**

(45) Mention de la délivrance du brevet:
**08.08.84 Bulletin 84/32**

(84) Etats contractants désignés:
**BE CH DE GB IT LI**

(56) Documents cités:
**EP - A - 0 036 369**
**FR - A - 2 256 419**
**FR - A - 2 299 655**
**GB - A - 1 448 743**
**GB - A - 2 049 220**
**US - A - 3 987 300**
**US - A - 4 076 379**
**US - A - 4 080 045**

(73) Titulaire: **LIGNES TELEGRAPHIQUES ET TELEPHONIQUES L.T.T., 1, rue Charles Bourseul, F-78702 Conflans-Ste-Honorine (FR)**

(72) Inventeur: **Bouvard, André, THOMSON-CSF SCPI 173, bld Haussmann, F-75360 Paris Cedex 08 (FR)**
Inventeur: **Hulin, Jean-Pierre, THOMSON-CSF SCPI 173, bld Haussmann, F-75360 Paris Cedex 08 (FR)**
Inventeur: **Le Maitre, Patrick, THOMSON-CSF SCPI 173, bld Haussmann, F-75360 Paris Cedex 08 (FR)**

(74) Mandataire: **Benoit, Monique et al, THOMSON-CSF SCPI 173, Bld Haussmann, F-75379 Paris Cedex 08 (FR)**

BUNDESDRUCKEREI BERLIN

## Description

La présente invention se rapporte d'une manière générale aux systèmes de transmission par fibres optiques, et concerne plus particulièrement un dispositif de protection d'une pluralité de fibres optiques dégagées à l'extrémité d'un même élément de câble et destinées à être connectées à des équipements électroniques, tels que par exemple des répéteurs.

D'une façon générale, un câble de transmission par fibres optiques comporte, sous un ensemble d'enveloppes de protection, une pluralité d'éléments de câble d'un type de structure déterminé. L'une des structures connues d'élément de câble à fibres optiques, consiste en un support cylindrique diélectrique armé le long de son axe et creusé de rainures, soit longitudinales, soit hélicoïdales à pas simple ou alterné, régulièrement disposées sur son pourtour, et dans chacune desquelles est logée une fibre optique. Une telle structure de câble est décrite notamment dans la demande de brevet français no 2 380 326 au nom de la Demanderesse, concernant: »Elément de câble incorporant des fibres optiques«.

On connaît déjà, d'après la demande de brevet français no 2 256 419, une terminaison de câble à plusieurs fibres optiques, constituée par un manchon monté à l'extrémité du câble et protégeant les parties terminales des fibres optiques.

D'autre part, lors de la pose des câbles de transmission par fibres optiques, agencés entre deux stations dites principales, il est connu d'installer une station dite secondaire de même structure qu'une station principale, c'est-à-dire comportant une salle appelée infrarépartiteur, destinée à recevoir les différents câbles de transmission, et une salle appelée salle de répéteur, dans laquelle est installé un ensemble de bâtis. Chaque bâti se compose d'au moins une tête de câble, réalisée sous forme d'un châssis, dans laquelle sont reçues les fibres optiques d'un même élément de câble, et d'un compartiment d'équipements électroniques, tels qu'en particulier des répéteurs destinés à amplifier les signaux optiques transmis par chaque fibre optique.

De plus, lors de la pose des câbles sur chantier, il est connu de mettre en oeuvre un procédé permettant de relier ou connecter les fibres optiques des câbles à des équipements électroniques. Ce procédé comporte les opérations suivantes effectuées sur les extrémités de câbles de transmission arrivant dans une station principale ou secondaire:

— on dénude les extrémités des câbles sur une longueur déterminée, de façon à dégager leurs éléments de câble correspondants;
— on dispose les différents éléments d'un même câble, après avoir éventuellement effectué une épissure, dans une pièce de division, jouant le rôle d'aiguilleur, disposée dans l'infrarépartiteur, de façon à diriger chaque élément de câble vers un bâti correspondant;
— on dénude, au niveau de la tête de câble de chaque bâti, l'extrémité de chaque élément de câble sur une longueur prédéterminée, de façon à dégager les fibres optiques;
— on monte, aux extrémités des fibres d'un même élément de câble, des connecteurs disposés en alignement dans la tête de câble;
— on positionne sur chaque connecteur un cordon monovoie constitué d'une fibre optique gainée;
— on relie les cordons monovoies aux entrées, par exemple de répéteurs, soit directement par une opération de soudure, soit par l'intermédiaire d'autres connecteurs; et
— on relie les sorties des répéteurs aux extrémités d'autres câbles de transmission, en procédant d'une manière identique à celle décrite précédemment.

Toutefois, les opérations du procédé décrit ci-dessus consistant à dénuder chaque élément de câble sur une longueur prédéterminée et à monter un connecteur à chaque extrémité de fibre, présentent des inconvénients. En effet, les fibres optiques dégagées se présentent nues dans la tête de câble, ce qui peut engendrer un risque de cassure desdites fibres; par conséquent, les fibres nues sont difficilement manipulables par un opérateur. De plus, le montage des connecteurs aux extrémités des fibres est une opération délicate et relativement longue à exécuter. En outre, le volume occupé par les connecteurs disposés en alignement dans la tête de câble est relativement important.

La présente invention a pour but de remédier à ces inconvénients en proposant un dispositif assurant une protection des fibres optiques en sortie d'un même élément de câble une fois dénudé, qui est entièrement satisfaisant, d'une structure simple, peu coûteux, ga-rantit une bonne tenue mécanique des fibres, annulant ainsi tout risque de cassure de celles-ci.

A cet effet, l'invention a pour objet un dispositif de protection d'une puralité de fibres optiques dégagées à l'extrémité d'un même élément de câble, comportant une pièce formant manchon dans laquelle est destinée à être emmanchée l'extrémité de l'élément de câble, caractérisé en ce que le manchon est pourvu d'une face terminale et en ce que le dispositif comporte une pluralité de gaines souples en forme de tubes, réparties à la périphérie de la face terminale du manchon de façon à s'étendre vers l'extérieur, reliées solidairement à ladite face terminale du manchon, et dans lesquelles sont destinées à être positionnées les fibres optiques, les gaines protégeant ainsi les fibres optiques.

Selon un autre aspect de l'invention, le manchon comporte sur son pourtour intérieur une pluralité de dents radiales s'étendant sensiblement sur toute la longueur du manchon, et réparties suivant le même écartement angulaire que les gaines, et chaque dent comporte un orifice longitudinal aligné suivant l'axe de la gaine correspondante, et par lequel est destinée à être introduite la fibre optique correspondante, les fibres étant destinées à coulisser longitudinalement dans les orifices des dents et à se positionner dans les gaines.

On comprend qu'ainsi le manchon monté à l'extrémité de l'élément de câble assurera une parfaite étanchéité dudit élément, et que les dents percées d'orifices permettront de guider longitudinalement les fibres à l'intérieur du manchon, de sorte que les fibres en sortie de l'élément de câble chemineront d'une manière précise et linéaire à l'intérieur du manchon et des gaines, annulant ainsi tout risque de cassure desdites fibres. De plus, chaque fibre optique protégée par sa gaine sera aisément manipulable par l'opérateur.

L'invention vise également un élément de câble muni du dispositif de protection selon l'invention, et une utilisation d'un tel élément de câble. Cette utilisation est caractérisée par le fait que le dispositif de protection est monté dans une tête de câble installée dans un bâti et destinée à permettre la connexion des fibres optiques à des équipements électroniques disposés dans le bâti.

D'autres caractéristiques et avantages de l'invention apparaîtront mieux dans la description détaillée qui suit et se réfère aux dessins annexés, donnés uniquement à titre d'exemple, et dans lesquels:

la fig. 1 est une vue en coupe transversale d'un élément de câble à fibres optiques;

la fig. 2 est une vue en perspective de la face de sortie du dispositif de protection monté sur l'extrémité de l'élément de câble, selon un premier mode de réalisation;

la fig. 3 est une vue similaire à la fig. 2, selon un second mode de réalisation; et

la fig. 4 est une vue en perspective de la face d'entrée du dispositif de protection représenté sur la fig. 3, sans l'élément de câble, et les fibres optiques étant positionnées dans les gaines.

Sur ces différentes figures, les mêmes références se rapportent aux mêmes éléments.

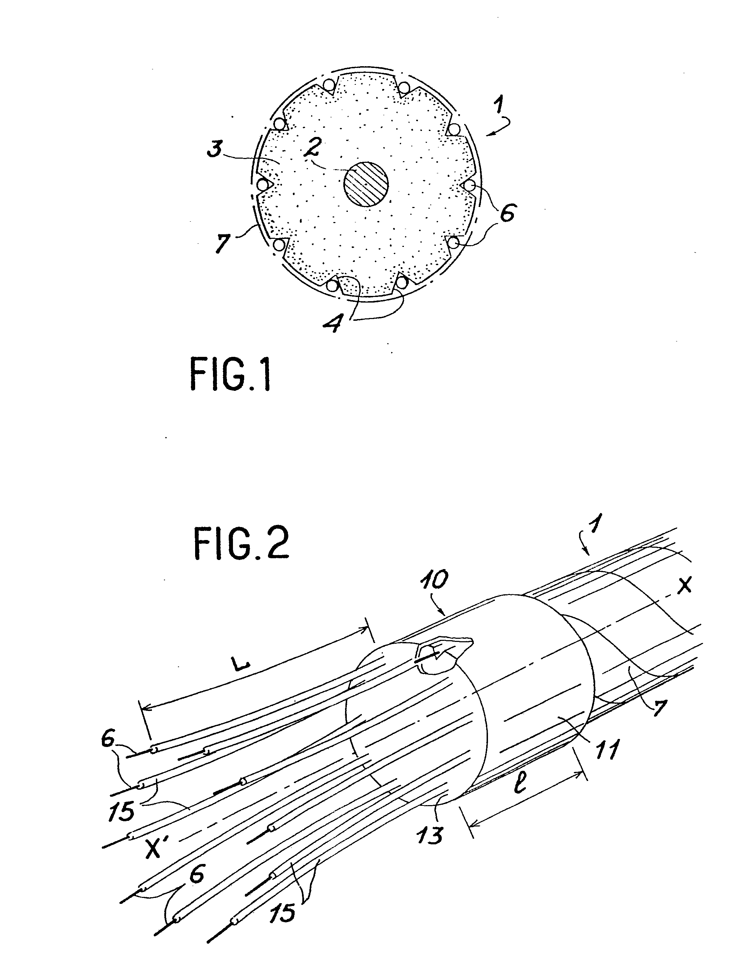

Suivant un exemple de réalisation, et en se reportant à la fig. 1, on a représenté en 1 un élément de câble à fibres optiques destinées à être reliées ou connectées à des équipements électroniques disposés dans un bâti. Ce bâti est installé dans une station principale ou secondaire d'un système de transmission par fibres optiques.

L'élément de câble 1 comporte une armature ou âme centrale 2 destinée à rigidifier le câble et à absorber les contraintes longitudinales, autour de laquelle est disposé un support ou jonc cylindrique diélectrique 3 creusé de rainures 4, longitudinales ou hélicoïdales à pas simple ou alterné, à profil par exemple en forme de V, et distribuées uniformément sur la surface externe du support 3. A l'intérieur de chaque rainure 4 est logée une fibre optique 6, et on a représenté en 7 l'enveloppe de protection de l'élément de câble 1.

Les premières opérations à effectuer pour la connexion des fibres optiques d'un câble de transmission comportant une pluralité d'éléments de câble du type représenté en 1 sur la fig. 1, à des équipements électroniques, tels que par exemple des répéteurs, consistent tout d'abord à dénuder l'extrémité de câble sur une longueur déterminée, de façon à dégager ou éclater les différents éléments de câble 1. Ensuite, après passage dans une pièce de division montée dans l'infrarépartiteur de la station secondaire, chaque élément de câble 1 est dirigé vers une tête de câble en forme de châssis, installée dans un bâti correspondant de ladite station.

Les opérations suivantes consistent à dénuder, au niveau de la tête de câble, l'extrémité d'élément de câble 1 sur une longueur prédéterminée, à écarter vers l'extérieur les fibres 6 ainsi dégagées, et à couper perpendiculairement à son axe l'ensemble âme 2 support 3 débarrassé de ses fibres.

L'opération suivante consiste à protéger chaque fibre optique 6 ainsi dégagée, au moyen du dispositif de protection selon l'invention, que l'on va maintenant décrire en se reportant aux fig. 2 à 4.

Selon un premier mode de réalisation représenté sur la fig. 2, le dispositif 10 de protection des fibres optiques comporte un manchon cylindrique thermorétractable 11, d'axe XX', de longueur 1, rélisé par exemple en une matière élastomère, et dans lequel est destinée à être emmanchée l'extrémité du support de l'élément de câble 1.

Le manchon 11 comporte, sur sa face terminale 13, un ensemble de gaines souples 15 en forme de tubes de longueur déterminée L, et s'étendant vers l'extérieur. Le nombre de gaines 15 est égal à celui des fibres optiques 6, de sorte que chaque fibre est positionnée, sensiblement sur toute sa longueur, dans la gain correspondante 15. Ainsi, chaque gaine 15 protège mécaniquement la fibre 6 dégagée à l'extrémité de l'élément de câble 1.

De plus, les gaines de protection 15 sont réparties à la périphérie de la face terminale 13 du manchon 11, suivant le même écartement angulaire que les rainures du support 3 (fig. 1), permettant ainsi aux fibres optiques 6 de coulisser longitudinalement dans les gaines correspondantes 15.

Avantageusement, les gaines 15 viennent de moulage avec le manchon 11, de sorte que le manchon et les gaines de protection constituent un ensemble unitaire se présentant sensiblement sous la forme d'un »gant«.

On notera que le manchon 11 peut également comporter des fils formant armatures, sans sortir du cadre de l'invention.

Pour réaliser le montage du dispositif de protection 10 sur l'élément de câble 1, on commence par enfiler les fibres optiques 6 dans leurs gaines 15, après passage dans le manchon thermorétractable 11, puis on monte le manchon 11 sur l'extrémité du support de l'élément de câble 1, et on chauffe ledit manchon pour assurer sa fixation rigide sur ledit élément de câble.

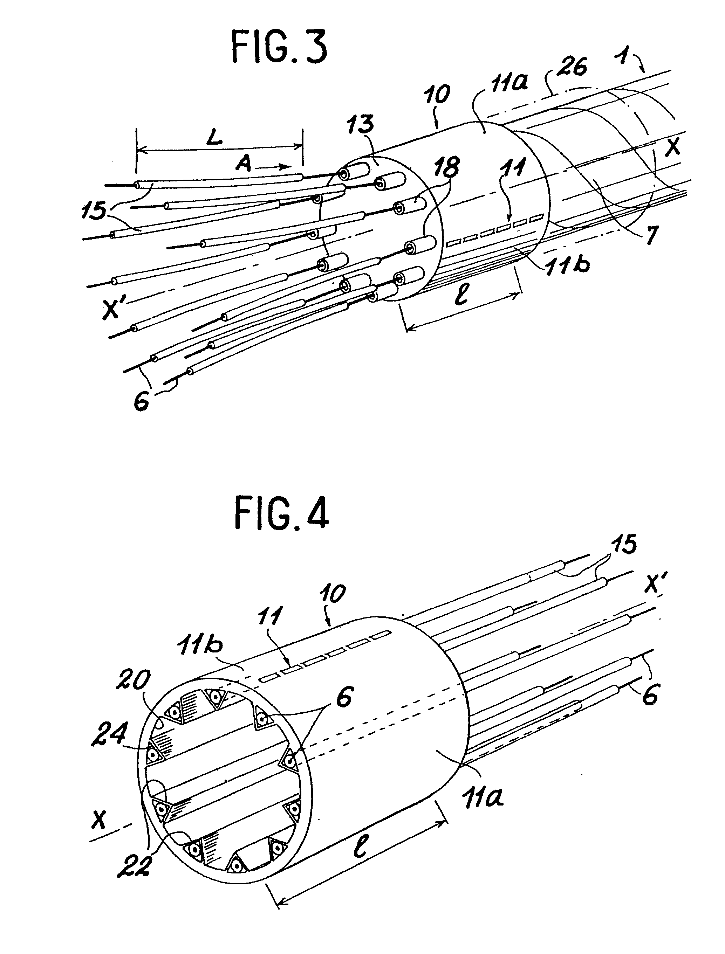

Selon un second mode de réalisation préféré, représenté sur les fig. 3 et 4, et dans lesquelles les éléments identiques à ceux de la fig. 2 sont désignés par le même repère, le manchon thermorétractable 11 est réalisé par exemple en deux parties 11a et 11b, et comporte sur sa face terminale de sortie 13, un ensemble de pièces formant tétons creux 18 faisant longitudinalement saillie dudit manchon.

Les tétons 18 sont répartis à la périphérie de la face terminale 13 du manchon suivant le même écartement angulaire que les rainures 4 du support 3 (fig. 1).

Avantageusement, les tétons 18 viennent de moulage avec le manchon 11, et sont réalisés par exemple en une matière élastomère.

De plus, les gaines de protection 15 sont rapportées sur les tétons 18, comme indiqué par la flèche A sur la fig. 3, de sorte que l'extrémité de chaque gaine 15 vient se positionner rigidement autour du téton correspondant 18.

Comme il apparaît sur la fig. 4 représentant la face d'entrée du manchon de la fig. 3, le manchon thermorétractable 11 comporte sur son pourtour intérieur 20, un ensemble de pièces formant dents radiales 22 s'étendant sensiblement sur toute la longueur 1 du manchon. Les dents 22, en nombre égal à celui des rainures 4 du support 3 de l'élément de câble, sont réparties dans le manchon 11 suivant le même écartement angulaire que les rainures 4 du support 3. De plus, les dents 22 présentent en section transversale une forme identique à celle des rainures 4, c'est-à-dire un V dans l'exemple choisi, et sont de dimensions sensiblement inférieures à celles des rainures 4, de sorte que chaque dent 22 viendra épouser intérieurement la forme de chaque rainure 4 lors de son insertion dans ladite rainure, comme on le verra par la suite.

Avantageusement, les dents 22 viennent de moulage avec le manchon 11 et sont réalisées par exemple en une matière élastomère.

De plus, chaque dent 22 est percée d'un orifice longitudinal 24 aligné avec le téton creux correspondant 18 (fig. 3), et disposé suivant l'axe de chaque fibre 6 portée par le support 3 de l'élément de câble. Le diamètre de chaque orifice 24 est égal à celui de chaque téton 18, et est légèrement supérieur à celui de chaque fibre 6.

Pour réaliser le positionnement des fibres optiques 6 dans les gaines de protection 15, on commence par introduire lesdites fibres dans les orifices correspondants 24 (fig. 4), de sorte que par translation du manchon 11, les fibres optiques coulissent longitudinalement dans lesdits orifices. Ainsi, les dents 22 assurent un guidage des fibres pour leur passage dans le manchon. Puis, en sortie des orifices 24, les fibres traversent les tétons correspondants 18 (fig. 3) et se positionnent longitudinalement dans les gaines rapportées correspondantes 15. Ainsi, les gaines 15 protègent mécaniquement les fibres dégagées à l'extrémité de l'élément de câble 1.

Après avoir positionné les fibres optiques dans les gaines de protection, l'opération suivante consiste à monter le dispositif de protection 10 sur le support de l'élément de câble. A cet effet, par translation du manchon 11, les dents 22 s'insèrent par glissement dans les rainures correspondantes 4 dudit support, en épousant intérieurement la forme desdites rainures. On notera que, lors de cette opération d'insertion des dents, les fibres optiques portées par le support 3 reposent à plat dans les orifices correspondants 24, permettant ainsi d'obtenir un positionnement parfaitement linéaire desdites fibres.

Puis, on chauffe le manchon thermorétractable 11 pour assurer sa fixation rigide sur l'élément de câble, les dents insérées dans les rainures du support assurant un blocage rigoureux du manchon sur le support, ce qui permet d'éviter toute rotation dudit manchon.

Afin de garantir une parfaite étanchéité de l'élément de câble au niveau de sa jonction avec le manchon, ce dernier comporte avantageusement un prolongement longitudinal 26 représenté en traits mixtes sur la fig. 3, venant en appui sur l'enveloppe 7 de l'élément de câble.

Le raccordement des fibres optiques 6 d'un même élément de câble 1 à des équipements électroniques alimentés, est achevé en installant le dispositif de protection 10 dans la tête de câble, et en connectant les fibres optiques gainées auxdits équipements, soit directement par soudure, soit par l'intermédiaire de connecteurs montés aux extrémités desdites fibres gainées.

## Revendications

1. Dispositif de protection d'une pluralité de fibres optiques dégagées à l'extrémité d'un même élément de câble, comportant une pièce formant manchon (11) dans laquelle est destinée à être emmanchée l'extrémité de l'élément de câble, caractérisé en ce que le manchon (11) est pourvu d'une face terminale (13) et en ce que le dispositif comporte une pluralité de gaines souples (15) en forme de tubes, réparties à la périphérie de la face terminale du manchon (11) de façon à s'étendre vers l'extérieur, reliées solidairement à ladite face terminale du manchon, et dans lesquelles sont destinées à être positionnées les fibres optiques (6), les gaines protégeant ainsi les fibres optiques.

2. Dispositif selon la revendication 1, caractérisé en ce que le manchon (11) est en une matière thermorétractable.

3. Dispositif selon l'une des revendications 1 ou 2, caractérisé en ce que les gaines (15) viennent de moulage avec le manchon (11).

4. Dispositif selon l'une des revendications 1 ou 2, caractérisé en ce qu'il comporte une pluralité de pièces formant tétons creux (18) faisant longitudinalement saillie de la face terminale du manchon (11), et sur lesquelles sont rapportées les gaines (15), les fibres optiques (6) étant destinées à traverser les tétons (18) et à se positionner dans les gaines (15).

5. Dispositif selon la revendication 4, caractérisé en ce que les tétons (18) viennent de moulage avec le manchon (11).

6. Dispositif selon l'une des revendications précédentes, caractérisé en ce que le manchon (11) comporte sur son pourtour intérieur (20) une pluralité de pièces formant dents radiales (22) s'étendant sensiblement sur toute la longueur du manchon, et réparties suivant le même écartement angulaire que les gaines (15), et en ce que chaque dent (22) comporte un orifice (24) longitudinal aligné suivant l'axe de la gaine correspondante, et par lequel est destinée à être introduite la fibre optique correspondante, les fibres étant destinées à coulisser longitudinalement dans les orifices (24) des dents et à se positionner dans les gaines (15).

7. Dispositif selon la revendication 6, caractérisé en ce que les dents (22) viennent de moulage avec le manchon (11).

8. Dispositif selon l'une des revendications précédentes, caractérisé en ce que le manchon (11) est réalisé en au moins deux parties de pièce (11a, 11b).

9. Elément de câble comportant une pluralité de fibres optiques dégagées à l'une des extrémités de l'élément, caractérisé en ce qu'à ladite extrémité de l'élément de câble (1) est monté un dispositif de protection (10) des fibres optiques tel que défini selon l'une quelconque des revendications précédentes.

10. Elément de câble selon les revendications 6 et 9, caractérisé en ce qu'il comporte un support cylindrique (3) creusé d'une pluralité de rainures (4) pratiquées sur son pourtour, et dans chacune desquelles est logée au moins une fibre optique (6), lesdites fibres étant dégagées à l'extrémité du support, en ce que le manchon (11) présente une forme cylindrique, en ce que les dents (22) du manchon sont en nombre égal à celui des rainures (4) du support, et en ce que lesdites dents (22) et les gaines de protection (15) des fibres optiques sont réparties suivant le même écartement angulaire que les rainures (4) du support (3), chaque dent venant ainsi s'insérer dans chaque rainure lors du montage du manchon sur l'extrémité du support.

11. Elément de câble selon la revendication 10, caractérisé en ce que les dents (22) et les rainures (4) présentent chacune une forme identique en section transversale, les dents étant de dimensions sensiblement inférieures à celles des rainures, de sorte que chaque dent (22) vient épouser intérieurement la forme de chaque rainure (4) lors de son insertion dans la rainure.

12. Elément de câble selon la revendication 11, caractérisé en ce que la forme de chaque dent (22) et de chaque rainure (4) est un V en section transversale.

13. Elément de câble selon l'une des revendications 10 à 12, caractérisé en ce que l'orifice (24) de chaque dent est disposé suivant l'axe de chaque fibre portée par l'élément, de sorte qu'une fois les dents insérées dans les rainures, les fibres (6) portées par l'élément reposent à plat dans les orifices correspondants des dents.

14. Elément de câble selon l'une des revendications 10 à 13, caractérisé en ce qu'il comporte une enveloppe de protection (7) autour du support, et en ce que le pourtour de l'extrémité du manchon par laquelle est emmanché le support (3) comporte un prolongement longitudinal (26) venant en appui sur l'enveloppe (7) de l'élément lors du montage du manchon.

15. Utilisation d'un élément de câble selon l'une des revendications 9 à 14, caractérisée en ce que le dispositif de protection (10) est monté dans une tête de câble installée dans un bâti et destinée à permettre la connexion des fibres optiques à des équipements électroniques disposés dans le bâti.

16. Utilisation selon la revendication 15, caractérisé en ce que le bâti est installé dans une station principale ou secondaire pour un système de transmission par fibres optiques.

**Patentansprüche**

1. Schutzvorrichtung für eine Mehrzahl von Lichtleiterfasern, die am Ende desselben Kabelelementes freigelegt sind, mit einem eine Hülse (11) bildenden Teil, in welche das Ende des Kabelelementes eingeschoben werden soll, dadurch gekennzeichnet, daß die Hülse (11) mit einer Begrenzungsfläche (13) versehen ist und daß die Vorrichtung eine Mehrzahl von flexiblen Hüllen (15) in Form von Röhren umfaßt, welche am Umfang der Begrenzungsfläche der Hülse (11) derart verteilt sind, daß sie sich zur Außenseite hin erstrecken, und welche fest mit der genannten Begrenzungsfläche der Hülse verbunden sind, wobei die Hüllen ferner dazu bestimmt sind, daß in ihnen die Lichtleiterfasern (6) in Stellung gebracht werden, und wobei die Hüllen auf diese Weise die Lichtleiterfasern schützen.

2. Vorrichtung nach Anspruch 1, dadurch gekennzeichnet, daß die Hülse (11) aus einem wärmeschrumpfbaren Material besteht.

3. Vorrichtung nach Anspruch 1 oder 2, dadurch gekennzeichnet, daß die Hüllen (15) einteilig mit der Hülse (11) geformt sind.

4. Vorrichtung nach Anspruch 1 oder 2, dadurch gekennzeichnet, daß sie eine Mehrzahl von hohlzapfenförmigen Teilen (18) umfaßt, die in Längsrichtung aus der Begrenzungsfläche der Hülse (11) herausstehen und an welche die Hüllen (15) angesetzt sind, wobei die Lichtleiterfasern (6) dazu bestimmt sind, die Zapfen (18) zu durchqueren und im Inneren der Hüllen (15) in Stellung zu gelangen.

5. Vorrichtung nach Anspruch 4, dadurch gekennzeichnet, daß die Zapfen (18) einteilig mit der Hülse (11) geformt sind.

6. Vorrichtung nach einem der vorstehenden Ansprüche, dadurch gekennzeichnet, daß die Hülse (11) an ihrem Innenumfang (20) eine Mehrzahl von Teilen aufweist, welche radiale Zinken (22) bilden, die sich im wesentlichen über die gesamte Länge der Hülse erstrecken und mit denselben Winkelabständen wie die Hüllen (15) verteilt sind, und daß jeder Zinken (22) eine Längsöffnung (24) umfaßt, die nach der Achse der entsprechenden Hülle ausgerichtet ist und über welche die entsprechende Lichtleiterfaser eingeschoben werden soll, wobei die Fasern dazu bestimmt sind, in Längsrichtung in den Öffnungen (24) der Zinken zu gleiten und in den Hüllen (15) in Stellung zu gelangen.

7. Vorrichtung nach Anspruch 6, dadurch gekennzeichnet, daß die Zinken (22) einteilig mit der Hülse (11) geformt sind.

8. Vorrichtung nach einem der vorstehenden Ansprüche, dadurch gekennzeichnet, daß die Hülse (11) aus wenigstens zwei Teilstücken (11a, 11b) gebildet ist.

9. Kabelelement mit einer Mehrzahl von Lichtleiterfasern, die an einem Ende des Elementes freiliegen, dadurch gekennzeichnet, daß an dem genannten Ende des Kabelelementes (1) eine Schutzvorrichtung (10) zum Schützen von Lichtleiterfasern nach einem der vorstehenden Ansprüche montiert ist.

10. Kabelelement nach den Ansprüchen 6 und 9, dadurch gekennzeichnet, daß es einen zylindrischen Träger (3) umfaßt, aus dem eine Mehrzahl von Rillen (4) an seinem Umfang ausgespart sind, in die jeweils wenigstens eine Lichtleiterfaser (6) eingebracht ist, wobei diese Fasern an dem Ende des Trägers freiliegen, daß die Hülse (11) eine zylindrische Gestalt aufweist, daß die Anzahl der Zinken (22) der Hülse gleich der der Rillen (4) des Trägers ist und daß die genannten Zinken (22) und die Hüllen (15) für den Schutz der Lichtleiterfasern mit demselben Winkelabstand wie die Rillen (4) des Trägers (3) verteilt sind, wobei so jeder Zinken bei der Montage der Hülse am Ende des Trägers in eine Rille eingreift.

11. Kabelelement nach Anspruch 10, dadurch gekennzeichnet, daß die Zinken (22) und die Rillen (4) jeweils dieselbe Querschnittsform aufweisen, wobei die Zinken merklich geringere Abmessungen als die Rillen aufweisen, so daß jeder Zinken (22) sich innenseitig an die Form jeder Rille (4) anschmiegt, während er in die Rille eindringt.

12. Kabelelement nach Anspruch 11, dadurch gekennzeichnet, daß die Form jedes Zinkens (22) und jeder Rille (4) im Querschnitt einem V entspricht.

13. Kabelelement nach einem der Ansprüche 10 bis 12, dadurch gekennzeichnet, daß die Öffnung (24) jedes Zinkens längs der Achse jeder von dem Element getragenen Faser angeordnet ist, so daß die von dem Element getragenen Fasern (6), sobald die Zinken in die Rillen eingedrungen sind, in den entsprechenden Öffnungen der Zinken flachliegen.

14. Kabelelement nach einem der Ansprüche 10 bis 13, dadurch gekennzeichnet, daß es eine Schutzhülle (7) um den Träger herum aufweist und daß der Umfang desjenigen Endes der Hülse, durch welches der Träger (3) eingeschoben wird, eine längsgerichtete Verlängerung (26) umfaßt, die bei der Montage der Hülse an der Hülle (7) des Elementes zur Anlage kommt.

15. Verwendung eines Kabelelementes nach einem der Ansprüche 9 bis 14, dadurch gekennzeichnet, daß die Schutzvorrichtung (10) in einem Kabelkopf montiert ist, der in einem Aufbau installiert ist und dazu bestimmt ist, das Anschließen der Lichtleiterfasern an elektronische Geräte zu ermöglichen, die in dem Aufbau angeordnet sind.

16. Verwendung nach Anspruch 15, dadurch gekennzeichnet, daß der Aufbau in einer Hauptstation oder Nebenstation eines Systems zur Übertragung über Lichtleiterfasern installiert ist.

**Claims**

1. Device for protecting a plurality of optical fibres exposed at the end of the same cable element, comprising a piece forming a sleeve (11) in which the end of the cable element is adapted to be inserted, characterized in that the sleeve (11) is provided with a terminal face (13) and in that the device comprises a plurality of flexible sheaths (15) in the form of tubes distributed at the periphery of the terminal face of the sleeve (11) so as to extend towards the outside and connected fixedly to said terminal face of the sleeve, and in which are adapted to be located the optical fibres (6), the sheaths thus protecting the optical fibres.

2. Device according to claim 1, characterized in that the sleeve (11) is of a thermally shrinkable material.

3. Device according to one of claims 1 or 2, characterized in that the sheaths (15) are molded integrally with the sleeve (11).

4. Device according to one of claims 1 or 2, characterized in that it comprises a plurality of pieces forming hollow studs (18) projecting longitudinally from the terminal face of the sleeve (11) and on which the sheaths (15) are fitted, the optical fibres (6) being adapted to traverse the studs (18) and position themselves in the sheaths (15).

5. Device according to claim 4, characterized in that the studs (18) are molded with the sleeve (11).

6. Device according to one of the preceding claims, characterized in that the sleeve (11) comprises at its inner periphery (20) a plurality of pieces forming radial teeth (22) extending substantially over the entire length of the sleeve and distributed with the same angular intervals as the sheaths (15), and in that each tooth (22) comprises a longitudinal orifice (24) which is aligned with the axis of the corresponding sheath and by which the corresponding optical fibre is adapted to be introduced, the fibres being adapted to slide longitudinally in the orifices (24) of the teeth and position themselves in the sheaths (15).

7. Device according to claim 6, characterized in that the teeth (22) are molded with the sleeve (11).

8. Device according to one of the preceding claims, characterized in that the sleeve (11) is formed in at least two parts (11a, 11b).

9. Cable element comprising a plurality of optical fibres exposed at one of the ends of the element, characterized in that at said end of the cable element (1) a device (10) for protecting the optical fibres is mounted such as defined according to any one of the preceding claims.

10. Cable element according to claims 6 and 9, characterized in that it comprises a cylindrical support (3) in which on the periphery of which a plurality of grooves (4) is formed in each of which at least one optical fibre (6) is disposed, said fibres being exposed at the end of the support, that the sleeve (11) has a cylindrical form, that the teeth (22) of the sleeve are equal in number to the grooves (4) of the support and that said teeth (22) and the sheaths (15) for protecting the optical fibres are distributed with the same angular interval as the grooves (4) of the support (3), each tooth thus being inserted in a groove on assembly of the sleeve on the end of the support.

11. Cable element according to claim 10, characterized in that teeth (22) and the grooves (4) each have an identical form in cross-section, the teeth being of dimensions substantially less than those of the grooves so that each tooth (22) adapts itself on the inside to the form of each groove (4) during its insertion into the groove.

12. Cable element according to claim 11, characterized in that the form of each tooth (22) and each groove (4) corresponds to a V in cross-section.

13. Cable element according to one of claims 10 to 12, characterized in that the orifice (24) of each tooth is disposed along the axis of each fibre carried by the element so that as soon as the teeth are inserted in the grooves the fibres (6) carried by the element lie flat in the corresponding orifices of the teeth.

14. Cable element according to any one of claims 10 to 13, characterized in that it comprises a protection envelope (7) round the support and that the priphery of the end of the sleeve through which the support (3) is inserted comprises a longitudinal extension (26) which comes to bear on the envelope (7) of the element during the assembly of the sleeve.

15. Use of a cable element according to one of the preceding claims 9 to 14, characterized in that the protection device (10) is mounted in a cable head installed in a structure and adapted to permit connection of the optical fibres to electronic equipment disposed in the structure.

16. Use according to claim 15, characterized in that the structure is installed in a main station or a secondary station for a system for transmission via optical fibres.

FIG.1

FIG.2

# FIG.3

# FIG.4